# EUROPÄISCHE PATENTSCHRIFT

(11) **EP 3 749 964 B1**
(45) Veröffentlichungstag und Bekanntmachung des Hinweises auf die Patenterteilung: **18.09.2024**
(21) Anmeldenummer: 19702243.7
(22) Anmeldetag: 28.01.2019
(51) Int. Cl.: G01P 3/488, G01P 3/49, G01P 13/04, G01P 13/00

(54) **VERFAHREN UND VORRICHTUNG ZUM BESTIMMEN EINER GESCHWINDIGKEIT MIT HILFE EINES INDUKTIVEN GESCHWINDIGKEITSSENSORS**
METHOD AND DEVICE FOR DETERMINING A SPEED BY MEANS OF AN INDUCTIVE SPEED SENSOR
PROCÉDÉ ET DISPOSITIF DE DÉTERMINATION D'UNE VITESSE À L'AIDE D'UN CAPTEUR DE VITESSE INDUCTIF

(30) Priorität: 09.02.2018 DE 102018001059
(43) Veröffentlichungstag der Anmeldung: 16.12.2020
(73) Patentinhaber: KNORR-BREMSE Systeme für Nutzfahrzeuge GmbH, 80809 München (DE)
(72) Erfinder: HUBER, Christoph, 80333 München (DE); KLUFTINGER, Andre, 63924 Kleinheubach (DE); EISSNER, Markus, 92676 Eschenbach (DE); HERGES, Michael, 80935 München (DE)
(86) Internationale Anmeldenummer: PCT/EP2019/051968
(87) Internationale Veröffentlichungsnummer: WO 2019/154654

(56) Entgegenhaltungen:
- DE-A1- 102005 016 110
- DE-A1- 102008 056 700
- DE-A1- 102012 224 098
- US-A1- 2003 176 932
- US-A1- 2005 083 041
- US-A1- 2015 057 878
- US-B1- 8 965 691

## Beschreibung

Die Erfindung betrifft ein Fahrerassistenzsystem, welches eine Geschwindigkeitsmessvorrichtung umfasst, gemäß dem Oberbegriff von Anspruch 1 sowie ein Fahrzeug mit einem solchen Fahrerassistenzsystem gemäß Anspruch 10.

Aus DE 101 46 949 A1 ein aktiver Geschwindigkeitssensor als Raddrehzahlsensor bekannt, in dem sich vor einem magnetoresistiven Element als Messaufnehmer ein ferro- oder dauermagnetischer Encoder als Geberelement dreht. Der Messaufnehmer ist als Brücke in einer Brückenschaltung verschaltet, wobei die am Messaufnehmer abfallende Brückenspannung durch den sich drehenden Encoder moduliert und von einer Auswerteschaltung ausgewertet wird. Ein derartiges magnetoresistives Elemente kann beispielsweise durch ein Hall-Element gebildet werden. Bei magnetoresistiven Geschwindigkeitssensoren mit magnetoresistiven Messaufnehmern hängt die Amplitude des Signals des Messaufnehmers nicht von der Drehzahl ab. Daher können magnetoresistive Geschwindigkeitssensoren eine Geschwindigkeit vom Stillstand bis zu einer maximalen Geschwindigkeit erfassen.

Gemäß der WO 2014/095311 A1 kommt für magnetoresistive Geschwindigkeitssensoren im Automobilbereich derzeit aus Kostengründen ausschließlich Silizium in Frage, wodurch die Arbeitstemperatur der magnetoresistiven Geschwindigkeitssensoren nach oben begrenzt werde, je nach Technologie auf 150 °C bis 200 °C. In Kraftfahrzeugen gibt es jedoch an einigen Einsatzorten für Geschwindigkeitssensoren höhere Spitzentemperaturen, die bislang nur durch induktive Geschwindigkeitssensoren abgedeckt werden können. Weiterhin gebe es einen Nachteil der halbleiterbasierten, magnetoresistiven Geschwindigkeitssensoren, der nicht prinzipbedingt sei, sondern durch die Art der Industrialisierung der Lösung verursacht werde. Da die Signalverarbeitungsschaltungen, die in Form von ASICs ausgebildet sein könnten, sehr billig sein müssten, was nur durch Massenproduktion möglich sei, könne keine Anpassung an die jeweilige Applikation in einem Fahrzeug vorgenommen werden. Alle Geschwindigkeitssensoren eines Typs arbeiteten mit der gleichen Obergrenze der Frequenz, ab der das Messsignal aus dem Messaufnehmer durch die Tiefpassfilterung abgeschwächt werde. Für bestimmte Anwendungen liege die Grenze, die durch den Massenmarkt gesetzt wird, jedoch teilweise zu niedrig.

DE 41 30 168 A1 offenbart einen passiven induktiven Geschwindigkeitssensor als Motordrehzahlsensor, in dem sich vor einer als Messaufnehmer ausgebildeten Spule mit ganz oder teilweise permanent-magnetischem Kern als Joch ein als Geberelement ausgebildeter ferromagnetischer Encoder dreht. Die Anordnung wirkt als Generator. In der Spule wird eine Generatorspannung induziert, deren Frequenz und Amplitude proportional zur Drehzahl sind. Bei induktiven Geschwindigkeitssensoren sind die Generatorspannung und deren Frequenz proportional zur erfassten Geschwindigkeit. Dies führt dazu, dass im Stillstand keine Generatorspannung gemessen werden kann. Daher existiert bei induktiven Geschwindigkeitssensoren eine untere Grenzgeschwindigkeit, bei der die induzierte Spannung noch gerade hoch genug ist, um eine Auswertung zu ermöglichen, die hinsichtlich Zuverlässigkeit und Genauigkeit der zu erfassenden Geschwindigkeit den Anforderungen genügt. Wenn bei Fahrzeugen die Radgeschwindigkeiten durch induktive Geschwindigkeitssensoren gemessen werden sollen, ist die Existenz einer solchen Untergrenze für die zu erfassende Geschwindigkeit allerdings nachteilig, weil in einem Fahrzeug üblicherweise vorhandene Regelsysteme wie Fahrerassistenzsysteme die Signale der als Raddrehzahlsensoren ausgebildeten Geschwindigkeitssensoren benötigen. Viele der zuvor genannten Funktionen werden bei jeder zu erfassenden Geschwindigkeit benötigt, andere sind besonders bei sehr niedrigen zu erfassenden Geschwindigkeiten bis hin zum Stillstand von Bedeutung. Beispiele sind die Berganfahrhilfe (HSA, "Hill Start Assist"), Autohold-Funktion und Antriebsschlupfregelung (ASR). Die induktiven Geschwindigkeitssensoren haben jedoch den Vorteil, dass ihre Herstellungskosten im Vergleich zu aus Halbleitern hergestellten magnetoresistiven Geschwindigkeitssensoren geringer sind. Zum anderen sind sie besonders robust. Das gilt für die mechanische Beanspruchung, für externe elektromagnetische Felder und für den zulässigen Temperaturbereich.

Gemäß WO 2014/095311 A1 und der gattungsbildenden DE 10 2012 224 098 A1 wird eine Induktivität als Messaufnehmer in einem Geschwindigkeitssensor verwendet. Anders als in einem induktiven Geschwindigkeitssensor wird jedoch die als Messaufnehmer verwendete Induktivität nicht als Generator betrieben. Vielmehr wird die als Messaufnehmer verwendete Induktivität wie in einem magnetoresistiven Geschwindigkeitssensor hinsichtlich ihrer sich verändernden elektrischen Impedanz betrachtet. Genauer umfasst das dort das angegebene Verfahren die Schritte: Anlegen einer Quellenspannung an die Induktivität, und Erfassen einer Änderung einer basierend auf der Quell- Spannung an der Induktivität abfallenden Messspannung, um die Änderung der Induktivität zu erfassen. Dabei moduliert der an der Induktivität mit der zu messenden Geschwindigkeit vorbeiziehende Encoder die Quellspannung in Abhängigkeit dieser Geschwindigkeit. Auf diese Weise wird eine veränderliche Messspannung als Messsignal erfasst, aus der die zu messende Geschwindigkeit hervorgeht. Als Quellspannung wird dabei eine Wechselspannung herangezogen. Die Geschwindigkeit des Encoders soll damit keinen Einfluss auf die Amplitude des Messergebnisses haben, so dass das angegebene Verfahren geschwindigkeitsunabhängig zur Messung der Geschwindigkeit eingesetzt werden könnte. Jedoch muss hierzu eine Spannungsquelle für die Quellspannung vorgesehen und angeschlossen werden.

US2003/0176932 A1 offenbart einen variablen Reluktanzsensor mit einer Umschalteinrichtung, wobei je nach Schaltzustand der Umschalteinrichtung entweder eine Spannung oder eine Induktivität als Messsignal herangezogen wird. Bei dem Reluktanzsensor handelt es sich jedoch um einen aktiven Sensor, weil mit Hilfe eines Pulsgenerators elektrische Pulse erzeugt werden. US 2005/0083041 A1 offenbart ebenfalls eine variablen Reluktanz-Geschwindigkeitssensor mit einer elektrischen Erregervorrichtung, weshalb hier ebenfalls ein aktiver Reluktanzsensor vorliegt. DE 10 2008 056 700 A1 offenbart einen induktiven Sensor, bei welchem eine Senderspule mit einem Oszillator verbunden ist, der eine Oszillatorfrequenz in die Senderspule einspeist. US 2015/0057878 A1 und US 8 965 691 B1 offenbaren Verfahren zur Bestimmung einer Änderung der Fahrtrichtung eines Fahrzeugs, bei dem Phasenverschiebungen von ABS-Sensorsignalen ausgewertet werden. DE 10 2005 016 110 A1 offenbart eine Vorrichtung zum Ermitteln der Rollrichtung eines Fahrzeugs, bei der phasenverschobene Drehzahlsignale von wenigstens an drei unterschiedlichen Rädern angeordneten Drehzahlsensoren ausgewertet werden.

Der vorliegenden Erfindung liegt die Aufgabe zugrunde, ein Fahrerassistenzsystem mit einer Geschwindigkeitsmessvorrichtung zur Verfügung zu stellen, welches mit einem geringeren Aufwand geschwindigkeitsunabhängig eine hohe Messgenauigkeit liefert. Ebenso soll auch ein Fahrzeug mit einem solchen Fahrerassistenzsystem zur Verfügung gestellt werden.

Gemäß der Erfindung wird diese Aufgabe durch die Merkmale der Ansprüche 1 und 10 gelöst.

### Offenbarung der Erfindung

Die Erfindung basiert auf der Überlegung, für die Geschwindigkeitsmessvorrichtung ausschließlich passive induktive Geschwindigkeitssensoren für die Geschwindigkeitsmessung wegen der oben beschriebenen Vorteile hinsichtlich Herstellkosten und Robustheit heranzuziehen.

Die Erfindung offenbart ein Fahrerassistenzsystem eines Fahrzeugs, welches insbesondere eine Autohold-Funktion und/oder eine Berganfahrhilfe-Funktion und/oder eine Antriebsschlupfregelung (ASR) umfasst, sowie wenigstens eine Geschwindigkeitsmessvorrichtung zum Bestimmen einer Geschwindigkeit zwischen einem wenigstens eine Spule umfassenden Messaufnehmer und einem die Induktivität L der wenigstens einen Spule und die in der wenigstens einen Spule induzierte Spannung U verändernden ferromagnetischen Geberelement in dem Fahrzeug offenbart, welche wenigstens einen induktiven Geschwindigkeitssensor aufweist, der mindestens Folgendes umfasst:
a) die wenigstens eine Spule,
b) das ferromagnetische Geberelement, welches sich zusammen mit einem Rad des Fahrzeugs koaxial in Bezug auf die Radachse dreht,
c) eine (elektronische) Auswerteschaltung, wobei
d) die Geschwindigkeitsmessvorrichtung eine Raddrehzahlmessvorrichtung ausbildet und der induktive Geschwindigkeitssensor einen Raddrehzahlsensor, und
e) die (elektronische) Auswerteschaltung ausgebildet ist, dass sie eine Änderung der Induktivität L der wenigstens einen Spule erfasst und die Geschwindigkeit als Drehgeschwindigkeit des Rads basierend auf der geänderten Induktivität L der wenigstens einen Spule bestimmt, wobei
f) der induktive Geschwindigkeitssensor ein passiver induktiver Geschwindigkeitssensor ist, wobei
   f1) die wenigstens eine Spule in einen Parallel- oder Seriell-Schwingkreis verschaltet ist und die Auswerteschaltung ausgebildet ist, dass sie die Induktivität der wenigstens einen Spule abhängig von der Resonanzfrequenz des Schwingkreises erfasst, oder dass
   f2) Mittel zum Beaufschlagen der wenigstens einen Spule mit einem elektrischen Impuls vorgesehen sind, welche die wenigstens eine Spule mit einem elektrischen Impuls beaufschlagen, wobei die Auswerteschaltung ausgebildet ist, dass sie die Induktivität der wenigstens einen Spule abhängig von der Antwort der wenigstens einen Spule auf den elektrischen Impuls erfasst, oder dass
   f3) Mittel zum Beaufschlagen der wenigstens einen Spule mit einer konstanten Frequenz vorgesehen sind, welche die wenigstens eine Spule mit einer konstanten Frequenz beaufschlagen und die Auswerteschaltung ausgebildet ist, dass sie dann die Induktivität der wenigstens einen Spule erfasst, und dass
g) die Auswerteschaltung weiterhin ausgebildet ist, dass sie
   g1) das Erfassen der Änderung der Induktivität L der wenigstens einen Spule und das Bestimmen der Geschwindigkeit im Rahmen des Fahrerassistenzsystems basierend auf der geänderten Induktivität L der wenigstens einen Spule nur solange vornimmt, bis die bestimmte Geschwindigkeit ausgehend von niedrigeren Geschwindigkeiten einen Geschwindigkeitsgrenzwert erreicht hat, und dass sie aber
   g2) wenn die bestimmte Geschwindigkeit den Geschwindigkeitsgrenzwert ausgehend von niedrigeren Geschwindigkeiten überschritten hat, eine Änderung der in der der wenigstens einen Spule induzierten Spannung U erfasst und die Geschwindigkeit basierend auf der geänderten Spannung U bestimmt wird, und dass sie
   g3) wenn die bestimmte Geschwindigkeit ausgehend von höheren Geschwindigkeiten den Geschwindigkeitsgrenzwert erreicht oder unterschritten hat, eine Änderung der Induktivität L der wenigstens einen Spule erfasst und die Geschwindigkeit basierend auf der geänderten Induktivität L der wenigstens einen Spule bestimmt wird.

Bei einem solchen Fahrerassistenzsystem kann insbesondere eine zuverlässige Erfassung der Geschwindigkeit Null bzw. des Fahrzeugstillstands bedeutsam sein.

Wie in WO 2014/095311 A1 beschrieben, wird daher (auch) eine Änderung der Induktivität L erfasst und die Geschwindigkeit basierend auf der geänderten Induktivität L bestimmt. Anders als in WO 2014/095311 A1 erfolgt das Erfassen der Änderung der Induktivität L der wenigstens einen Spule und das Bestimmen der Geschwindigkeit basierend auf der geänderten Induktivität L der wenigstens einen Spule allerdings nur solange, bis die durch Änderung der Induktivität L bestimmte Geschwindigkeit ausgehend von niedrigeren Geschwindigkeiten einen Geschwindigkeitsgrenzwert erreicht hat.

Wenn dann die bestimmte Geschwindigkeit den Geschwindigkeitsgrenzwert ausgehend von niedrigeren Geschwindigkeiten überschritten hat, dann wird hingegen eine Änderung der in der wenigstens einen Spule induzierten Spannung U erfasst und die Geschwindigkeit basierend auf der geänderten Spannung U bestimmt.

Wenn dann die bestimmte Geschwindigkeit ausgehend von höheren Geschwindigkeiten wieder den Geschwindigkeitsgrenzwert erreicht oder unterschritten hat, wird wiederum eine Änderung der Induktivität L der wenigstens einen Spule erfasst und die Geschwindigkeit wiederum basierend auf der geänderten Induktivität L der wenigstens einen Spule bestimmt.

Der Erfindung liegt dabei die Überlegung zugrunde, dass die Induktivität L der wenigstens einen Spule durch bevorzugt schnell hintereinander erfolgende Messungen mit einer bestimmten Abtastfrequenz erfasst wird. Diese Abtastfrequenz müsste allerdings bei hohen Geschwindigkeiten zwischen dem Geberelement und dem Messaufnehmer, d.h. bei Geschwindigkeiten oberhalb des Geschwindigkeitsgrenzwerts relativ hoch sein, was für ein Erfassen der Induktivität L der wenigstens einen Spule aber schwierig zu realisieren ist.

Aus diesem Grund hat die Erfindung erkannt, dass es, wenn die bestimmte Geschwindigkeit den Geschwindigkeitsgrenzwert überschritten hat, günstiger ist, in konventioneller Weise eine Änderung der in der wenigstens einen Spule induzierten Spannung U zu erfassen und die Geschwindigkeit basierend auf der geänderten Spannung U zu bestimmen. Denn für eine Erfassung der in der wenigstens einen Spule induzierten Spannung U spielt die Abtastfrequenz der Messung eine untergeordnete Rolle.

Andererseits erfolgt das Bestimmen der Geschwindigkeit basierend auf der geänderten Induktivität L der wenigstens einen Spule solange, bis die durch Änderung der Induktivität L bestimmte Geschwindigkeit ausgehend von niedrigeren Geschwindigkeiten den Geschwindigkeitsgrenzwert erreicht hat. Anders als in einem induktiven Geschwindigkeitssensor wird die als Messaufnehmer verwendete Spule dann nicht als Generator betrieben. Vielmehr wird die als Messaufnehmer verwendete wenigstens eine Spule wie in einem magnetoresistiven Geschwindigkeitssensor hinsichtlich ihrer sich verändernden elektrischen Impedanz bzw. Induktvität L betrachtet, mit dem Vorteil, dass dann niedrige Geschwindigkeiten bis hin zum Stillstand zuverlässig erfasst werden können. Dies ist vor allem bei einer Bestimmung von Radgeschwindigkeiten im Rahmen von Fahrerassistenzsystemen wie Berganfahrhilfen (HSA, "Hill Start Assist"), Autohold-Systemen und Antriebsschlupfregelung (ASR) von Vorteil.

Die Erfindung vereint daher die Vorteile beider Messmethoden in sich, bei welchen geschwindigkeitsabhängig, d.h. bei niedrigen Geschwindigkeiten bis zum Erreichen des Geschwindigkeitsgrenzwerts die Induktivität L der wenigstens einen Spule und bei höheren Geschwindigkeiten oberhalb des Geschwindigkeitsgrenzwerts die in der wenigstens einen Spule induzierte Spannung U erfasst und auf der Basis der jeweils erfassten Größe - Induktivität L oder induzierte Spannung U - jeweils die Geschwindigkeit zwischen dem Messaufnehmer und dem Geberelement bestimmt wird.

Gemäß einer Weiterbildung der Geschwindigkeitsmessvorrichtung bildet sie eine Raddrehzahlmessvorrichtung aus. Beispielsweise ist das ferromagnetische Geberelement dann ringförmig ausgebildet und dreht sich zusammen mit einem Rad des Fahrzeugs koaxial in Bezug auf die Radachse, während die wenigstens eine stationäre Spule einen weichmagnetischen Kern umgibt und eine gemeinsame Mittelachse der wenigstens einen Spule und des weichmagnetischen Kerns parallel zur Radachse und senkrecht zu einer Ebene angeordnet ist, welche auch senkrecht zur Radachse ist.

Insbesondere kann bei der Geschwindigkeitsmessvorrichtung das ferromagnetische Geberelement abwechselnd vorspringende Zähne und Zahnlücken aufweisen. In diesem Fall weist ein zeitlicher Verlauf der Induktivität L der wenigstens einen Spule ein Maximum auf, wenn ein Zahn dem weichmagnetischen Kern gegenüberliegt und ein Minimum, wenn eine Zahnlücke dem weichmagnetischen Kern gegenüberliegt. Daher ergibt sich ständig ein Wechsel zwischen einer minimalen Iduktivität Lmin und einer maximalen Induktivität Lmax, wenn sich das Rad zusammen mit dem Geberelement gegenüber der Spule mit dem weichmagnetischen Kern dreht. Abschnitte in dem zeitlichen Verlauf der Induktivität, in denen sich die Induktivität nicht ändert oder in welchen der Gradient gleich Null ist markieren dann einen Stillstand des Rades.

Auch kann bei der Geschwindigkeitsmessvorrichtung der weichmagnetische Kern an einem vom ferromagnetische Geberelement wegweisenden Ende einen Permanentmagneten aufweist.

Weiterhin kann das Fahrzeug mehrere Räder mit jeweils einem induktiven Geschwindigkeitssensor als Raddrehzahlsensor an wenigstens zwei Rädern aufweisen, wobei die Auswerteschaltung ausgebildet sein kann, dass sie ein Vorliegen von Vorwärtsfahrt oder Rückwärtsfahrt des Fahrzeugs auf der Basis wenigstens eines zeitlichen Phasenversatzes zwischen zeitlichen Verläufen der mittels der Raddrehzahlsensoren der wenigstens zwei Räder erfassten Induktivitäten L ermittelt.

Insbesondere kann dann die Auswerteschaltung ausgebildet sein, dass sie
a) ausgehend von einer erfassten Fahrt des Fahrzeugs wenigstens einen ersten zeitlichen Phasenversatz zwischen ersten zeitlichen Verläufen der von den Raddrehzahlsensoren der wenigstens zwei Räder erfassten Induktivitäten L bis zu einem erfassten Stillstand des Fahrzeugs speichert, und dann
b) nach einem erfassten Wiederanfahren des Fahrzeugs wenigstens einen zweiten zeitlichen Phasenversatz zwischen zweiten zeitlichen Verläufen der von den Raddrehzahlsensoren der wenigstens zwei Räder erfassten Induktivitäten L erfasst und mit dem wenigstens einen ersten zeitlichen Phasenversatz vergleicht, und wenn sie dabei feststellt, dass
c) der wenigstens eine zweite zeitliche Phasenversatz von dem wenigstens einen ersten zeitlichen Phasenversatz eine signifikante Abweichung aufweist, auf eine Umkehrung der Fahrtrichtung von Vorwärtsfahrt auf Rückwärtsfahrt oder von Rückwärtsfahrt auf Vorwärtsfahrt schließt, und falls sie aber
d) andernfalls feststellt, dass eine lediglich nicht signifikante Abweichung des wenigstens einen zweiten zeitlichen Phasenversatzes von dem wenigstens einen ersten zeitlichen Phasenversatz vorliegt, auf eine Beibehaltung der Fahrtrichtung Vorwärtsfahrt oder Rückwärtsfahrt schließt.

Das Schließen auf eine Umkehrung der Fahrtrichtung von Vorwärtsfahrt auf Rückwärtsfahrt oder von Rückwärtsfahrt auf Vorwärtsfahrt bzw. das Schließen auf eine Beibehaltung der Fahrtrichtung Vorwärtsfahrt oder Rückwärtsfahrt kann eine Erzeugung eines entsprechenden Signals durch die elektronische Auswerteschaltung beinhalten, welches dann zur Weiterverarbeitung beispielsweise einem Fahrerassistenzsystem zur Verfügung gestellt wird.

Ein Erfassen der Fahrt bzw. der Wiederanfahrt des Fahrzeugs kann durch eine zeitliche Änderung der Induktivität L von der elektronischen Auswerteschaltung ermittelt werden.

Weiterhin kann bei der Geschwindigkeitsmessvorrichtung die Auswerteschaltung ausgebildet sein, dass sie als eine signifikante Abweichung zwischen dem wenigstens einen zweiten zeitlichen Phasenversatz von dem wenigstens einen ersten zeitlichen Phasenversatz interpretiert, wenn sie feststellt, dass der wenigstens eine zweite zeitliche Phasenversatz gegenüber dem wenigstens einen ersten zeitlichen Phasenversatz invertiert ist Eine solche Inversion bedeutet beispielsweise, dass, wenn bei der Fahrt des Fahrzeugs ein Maximum oder ein Minimum des zeitlichen Verlaufs der Induktivität L eines ersten Raddrehzahlsensors einem Maximum oder einem Minimum des zeitlichen Verlaufs der Induktivität L eines zweiten Raddrehzahlsensors zeitlich vorgelaufen ist, dieser Vorlauf sich bei der Wiederanfahrt des Fahrzeugs in einen Nachlauf umkehrt, d.h. dass das Maximum oder das Minimum des zeitlichen Verlaufs der Induktivität L des ersten Raddrehzahlsensors dem Maximum oder dem Minimum des zeitlichen Verlaufs der Induktivität L des zweiten Raddrehzahlsensors nun zeitlich nachläuft. Zur Erläuterung dieses Effekts wird auf die obigen Ausführungen verwiesen.

Bei der Geschwindigkeitsmessvorrichtung kann die Auswerteschaltung auch ausgebildet sein, dass sie einen Stillstand des Fahrzeugs dadurch erfasst, dass sie in dem zeitlichen Verlauf der Induktivität L einen Abschnitt identifiziert, in welchem der Gradient des Verlaufs der Induktivität L im Wesentlichen gleich Null ist.

Die Anmelderin nutzt dabei den Effekt, dass bei an mehreren Rädern angeordneten Raddrehzahlsensoren davon auszugehen ist, dass deren periodischen Induktivitätssignale aufgrund einer in Umfangsrichtung gesehen zufälligen Montage der Geberelemente (Encoder) und damit der Zahn/Zahnlückenpositionen an den Rädern stets von phasenverschobenen Verläufen der von verschiedenen Raddrehzahlsensoren erfassten Induktivitäten L auszugehen ist. Bei zwei mit jeweils einem Raddrehzahlsensoren versehenen Rädern läuft daher der erste zeitliche Verlauf der von dem einen Raddrehzahlsensor erfassten Induktivität L beispielsweise dem ersten zeitlichen Verlauf der von dem anderen Raddrehzahlsensor erfassten Induktivität L zeitlich vor oder nach. Wie die Anmelderin erkannt hat, kehrt sich dieser zeitliche Vorlauf bzw. Nachlauf jedoch nach einem Zwischenstopp oder Fahrzeugstillstand in einen zeitlichen Nachlauf bzw. Vorlauf um, wenn die (Dreh)Bewegungsrichtung der Geberelemente bzw. die Fahrtrichtung nach dem Zwischenstopp oder Fahrzeugstillstand geändert wurde, was eine signifikante Abweichung des zweiten zeitlichen Phasenversatzes von dem ersten zeitlichen Phasenversatz darstellt.

Das Schließen auf eine Umkehrung der Fahrtrichtung von Vorwärtsfahrt auf Rückwärtsfahrt oder von Rückwärtsfahrt auf Vorwärtsfahrt bzw. das Schließen auf eine Beibehaltung der Fahrtrichtung Vorwärtsfahrt oder Rückwärtsfahrt kann den Verfahrensschritt einer Erzeugung eines entsprechenden Signals beinhalten, welches dann zur Weiterverarbeitung beispielsweise einem Fahrerassistenzsystem zur Verfügung gestellt wird.

Ein Erfassen der Fahrt bzw. der Wiederanfahrt des Fahrzeugs kann durch eine zeitliche Änderung der Induktivität L auf einfache Weise ermittelt werden.

Daher kann insbesondere als eine signifikante Abweichung des wenigstens einen zweiten zeitlichen Phasenversatzes von dem wenigstens einen ersten zeitlichen Phasenversatz interpretiert werden, wenn der wenigstens eine zweite zeitliche Phasenversatz gegenüber dem wenigstens einen ersten zeitlichen Phasenversatz invertiert ist, wobei sich ein zeitlicher Vorlauf des ersten zeitlichen Verlaufs der von dem Raddrehzahlsensor eines ersten Rads der wenigstens zwei Räder erfassten Induktivität gegenüber dem ersten zeitlichen Verlauf der von dem Raddrehzahlsensor eines zweiten Rads der wenigstens zwei Räder erfassten Induktivität L um den ersten zeitlichen Phasenversatz in einen zeitlichen Nachlauf des zweiten zeitlichen Verlaufs der von dem Raddrehzahlsensor des ersten Rads der wenigstens zwei Räder erfassten Induktivität L gegenüber dem zweiten zeitlichen Verlauf der von dem Raddrehzahlsensor des zweiten Rads der wenigstens zwei Räder erfassten Induktivität L um den zweiten zeitlichen Phasenversatz ändert. Während daher der erste zeitliche Verlauf der von dem Raddrehzahlsensor des ersten Rades erfassten Induktivität L dem ersten zeitlichen Verlauf der von dem Raddrehzahlsensor des zweiten Rades erfassten Induktivität L zeitlich vorgelaufen ist, kehren sich nach dem Zwischenstopp oder Fahrzeugstillstand die Verhältnisse um, indem dann der zweite zeitliche Verlauf der von dem Raddrehzahlsensor des ersten Rades erfassten Induktivität L dem zweiten zeitlichen Verlauf der von dem Raddrehzahlsensor des zweiten Rades erfassten Induktivität L zeitlich nachläuft. Dieser Wechsel von zeitlichem Vorlauf während der ersten zeitlichen Verläufe der Induktivität L, also zeitlich vor dem Fahrzeugstillstand oder Zwischenstopp in einen zeitlichen Nachlauf während der zweiten zeitlichen Verläufe der Induktivität L stellt daher ein Indiz für eine signifikante Abweichung des wenigstens einen zweiten zeitlichen Phasenversatzes von dem wenigstens einen ersten zeitlichen Phasenversatz dar.

Auch kann ein Stillstand des Fahrzeugs dadurch erfasst werden, dass in dem zeitlichen Verlauf der Induktivität L ein Abschnitt identifiziert wird, in welchem sich die Induktivität L nicht ändert und/oder in welchem der Gradient des zeitlichen Verlaufs der Induktivität L im Wesentlichen gleich Null ist.

Ebenso beinhaltet die Erfindung ein Fahrzeug mit einem solchen Fahrerassistenzsystem.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: schematische Darstellung einer Raddrehzahlmessvorrichtung als bevorzugte Ausführungsform einer Geschwindigkeitsmessvorrichtung der Erfindung;
- Fig.2: ein Diagramm, welches den zeitlichen Verlauf der durch die Raddrehzahlmessvorrichtung nach Fig.1 erfassten Induktivität L über der Zeit t darstellt;
- Fig.3: ein Diagramm, welches den zeitlichen Verlauf der durch Raddrehzahlmessvorrichtungen an vier Rädern eines Fahrzeugs erfassten Induktivitäten L über der Zeit t bei einer Fahrt in einer einzigen Fahrtrichtung mit Zwischenstopp darstellt;
- Fig.4: ein Diagramm, welches den zeitlichen Verlauf der durch Raddrehzahlmessvorrichtungen an vier Rädern eines Fahrzeugs erfassten Induktivitäten L über der Zeit t bei einer Fahrt in einer Fahrtrichtung und einem Zwischenstopp zeitlich nachfolgend in der Gegenfahrtrichtung darstellt.

### Beschreibung des Ausführungsbeispiels

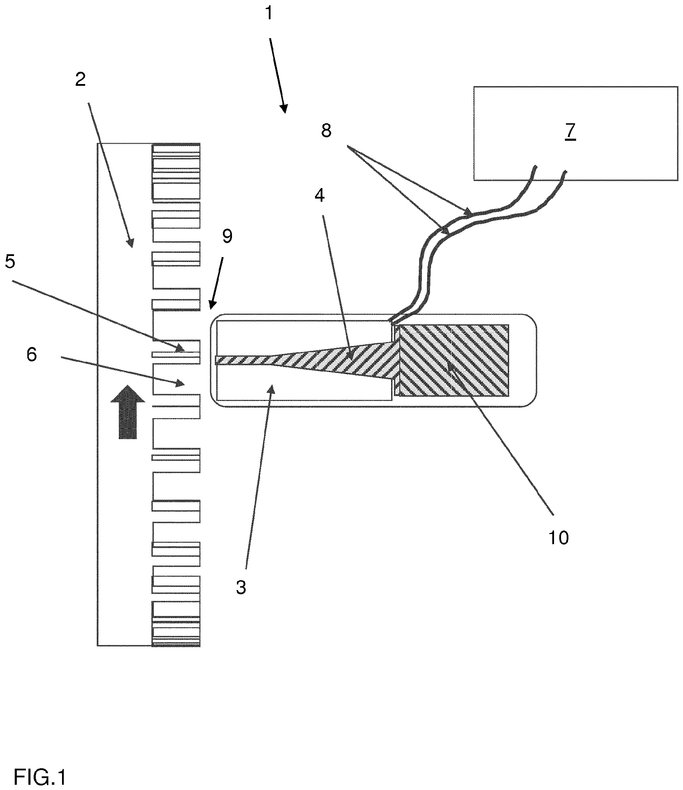

**Fig.1** ist ein eine schematische Darstellung eines Raddrehzahlsensors 1 als bevorzugte Ausführungsform einer Geschwindigkeitsmessvorrichtung der Erfindung. Der Raddrehzahlsensor 1 ist als passiver induktiver Geschwindigkeitssensor ausgebildet und umfasst ein ferromagnetisches Geberelement (Encoder) 2, welches beispielsweise ringförmig ausgebildet ist und sich zusammen mit einem Rad des Fahrzeugs koaxial in Bezug auf die Radachse dreht. Weiterhin umfasst der Raddrehzahlsensor 1 eine stationäre Spule 3 und einen weichmagnetischen Kern 4, wobei die Spule 3 den weichmagnetischen Kern 4 umgibt und eine gemeinsame Mittelachse der Spule 3 und des weichmagnetischen Kerns 4 parallel zur Radachse und senkrecht zu einer Ebene angeordnet ist, welche auch senkrecht zur Radachse ist.

Das ferromagnetische Geberelement 2 weist abwechselnd vorspringende Zähne 5 und Zahnlücken 6 auf. Umfasst von dem Raddrehzahlsensor 1 ist auch eine elektronische Auswerteschaltung 7, welche durch Leitungen 8 mit der Spule 3 verbunden ist. Zwischen dem ferromagnetischen Geberelement 2 und einem zu diesem weisenden Ende des weichmagnetischen Kerns 4 ist ein lichter Spalt 9 ausgebildet. An dem vom ferromagnetischen Geberelement 2 weg weisenden Ende des weichmagnetischen Kerns 4 ist ein Permanentmagnet 10 angeordnet. Das Magnetfeld des Permanentmagneten 10 durchsetzt einerseits den weichmagnetischen Kern 4, die Spule 3 wie auch das ferromagnetische Geberelement 2 wenigstens stellenweise.

Wenn sich das ferromagnetische Geberelement 2 gegenüber der stationären Einheit aus Spule 3 und weichmagnetischem Kern 4 dreht, also wenn sich das mit dem Raddrehzahlsensor 1 versehene Rad des Fahrzeugs dreht, dann ändert sich zum einen die Induktivität L der Spule 3 und eine in der Spule 3 induzierte Spannung U infolge der im Bereich des Spalts 9 abwechselnd ein- und ausfahrenden Zähne 5 und Zahnlücken 6.

Zum einen wird aufgrund des Induktionsgesetzes in der Spule 3 und daher auch in den Leitungen 8 eine Spannung U induziert, die der zeitlichen Änderung des magnetischen Flusses Φ proportional ist. Abhängig von der induzierten Spannung U kann dann in der elektronischen Auswerteschaltung 7 dann die (Dreh-) Geschwindigkeit des ferromagnetischen Geberelements 2 und damit des Rades bestimmt werden. Dabei hängt der magnetische Fluss Φ davon ab, ob dem Ende des weichmagnetischen Kerns 4, welches dem ferromagnetischen Geberelement 2 zugewandt ist, ein Zahn 5 oder eine Zahnlücke 6 gegenübersteht. Ein Zahn 5 bündelt den Streufluss des Permanentmagneten 10, ein Zahnlücke 6 dagegen schwächt den Magnetfluss. Wenn sich daher das Rad des Fahrzeugs zusammen mit dem ferromagnetischen Geberelement 2 dreht, so wird durch jeden Zahn 5 eine Magnetfeldänderung bewirkt. Diese Änderung des Magnetfelds erzeugt in der Spule 3 die Induktionsspannung U. Die Anzahl der Impulse pro Zeiteinheit sind dann ein Maß für die Raddrehzahl des Rades.

Zum einen ist daher die elektronische Auswerteschaltung 7 ausgebildet, dass sie eine Änderung der in der Spule 3 induzierten Spannung U erfasst und die (Dreh-) Geschwindigkeit des Rades basierend auf der geänderten, in der Spule 3 induzierten Spannung U bestimmt.

Andererseits wird bei einer Drehung des Rades und damit des ferromagnetischen Geberelements 2 die Induktivität L der Spule 3 in einer periodischen Weise verändert. Abhängig davon, ob ein Zahn 5 oder eine Zahnlücke 6 dem weichmagnetischen Kern 4 gegenüberliegt ändert sich die Induktivität L der Spule 3.

Die elektronische Auswerteschaltung 7 ist daher zum andern ausgebildet ist, dass sie auch eine Änderung der Induktivität L der Spule 3 erfasst und die (Dreh-) Geschwindigkeit des Rades basierend auf der geänderten Induktivität L der Spule 3 bestimmt.

Dabei sind verschiedene Erfassungsverfahren denkbar. Beispielsweise kann die Spule 3 in einen Parallel- oder Seriell-Schwingkreis verschaltet und die Auswerteschaltung ausgebildet sein, dass sie die Induktivität L der Spule 3 abhängig von der Resonanzfrequenz des Schwingkreises erfasst. Alternativ können Mittel zum Beaufschlagen der Spule 3 mit einem elektrischen Impuls vorgesehen sein, welche die Spule 3 mit einem elektrischen Impuls beaufschlagen, wobei die Auswerteschaltung 7 dann beispielsweise ausgebildet ist, dass sie die Induktivität L der Spule 3 abhängig von der Antwort der Spule 3 auf den elektrischen Impuls erfasst. Nicht zuletzt können auch Mittel zum Beaufschlagen der Spule 3 mit einer konstanten Frequenz vorgesehen sein, welche die Spule 3 mit einer konstanten Frequenz beaufschlagen, wobei dann die Auswerteschaltung 7 ausgebildet ist, dass sie die Induktivität L der Spule 3 erfasst.

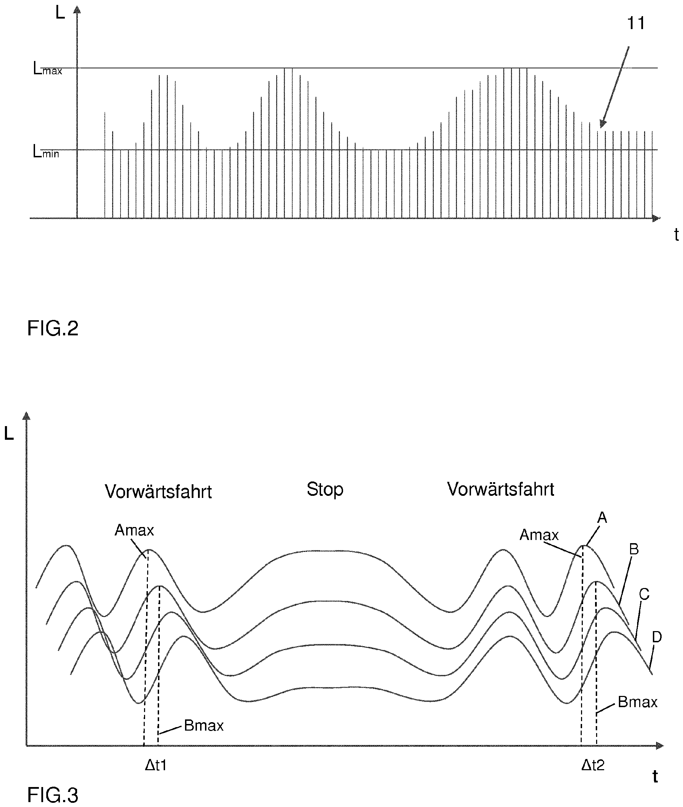

**Fig.2** zeigt ein Diagramm, welches den zeitlichen Verlauf der durch den Raddrehzahlsensor 1 nach **Fig.1** erfassten Induktivität L über der Zeit t darstellt. Wie dort zu erkennen, stellt sich dabei ein periodischer Verlauf der Induktivität L ein, welcher sich annährend sinusförmig zwischen einem Maximalwert Lmax und einem Minimalwert Lmin bewegt, wobei die Maximalwerte Lmax eingenommen werden, wenn ein Zahn 5 des ferromagnetischen Geberelements 2 dem weichmagnetischen Kern 4 gegenüberliegt und die Minimalwerte Lmin, wenn eine Zahnlücke 6 dem weichmagnetischen Kern 4 gegenübersteht.

Durch den Pfeil 11 in **Fig.2** gekennzeichnete Abschnitt oder Bereiche, in welchen sich die Induktivität L nicht ändert und/oder der Gradient des zeitlichen Verlaufs der Induktivität L im Wesentlichen gleich Null ist, identifiziert die elektronische Auswerteschaltung 7 als Stillstand des Rades.

Die elektronische Auswerteschaltung 7 ist weiterhin ausgebildet ist, dass sie das Erfassen der Änderung der Induktivität L der Spule 3 und das Bestimmen der (Dreh-) Geschwindigkeit des Rades basierend auf der geänderten Induktivität L der Spule 3 nur solange vornimmt, bis die bestimmte Geschwindigkeit ausgehend von niedrigeren Geschwindigkeiten beispielsweise ausgehend vom Stillstand einen Geschwindigkeitsgrenzwert erreicht hat. Dieser Geschwindigkeitsgrenzwert kann relativ niedrig sein.

Die Auswerteschaltung 7 ist weiterhin ausgebildet, dass sie wenn die von ihr bestimmte Geschwindigkeit den Geschwindigkeitsgrenzwert ausgehend von niedrigeren Geschwindigkeiten beispielsweise bei einem Beschleunigen des Fahrzeugs überschritten hat, die Änderung der in der Spule 3 induzierten Spannung U erfasst und die Geschwindigkeit dann nicht mehr basierend auf der Änderung der Induktivität L sondern lediglich basierend auf der geänderten Spannung U bestimmt. Wenn dann die durch die Auswerteschaltung 7 bestimmte Geschwindigkeit ausgehend von höheren Geschwindigkeiten den Geschwindigkeitsgrenzwert wieder erreicht oder unterschritten hat, also beispielsweise wenn das in Fahrt befindliche Fahrzeug abgebremst wird, dann wird wiederum eine Änderung der Induktivität L der wenigstens einen Spule 3 erfasst und die Geschwindigkeit dann nicht mehr basierend auf der Änderung der induzierten Spannung U sondern basierend auf der geänderten Induktivität L der Spule 3 bestimmt.

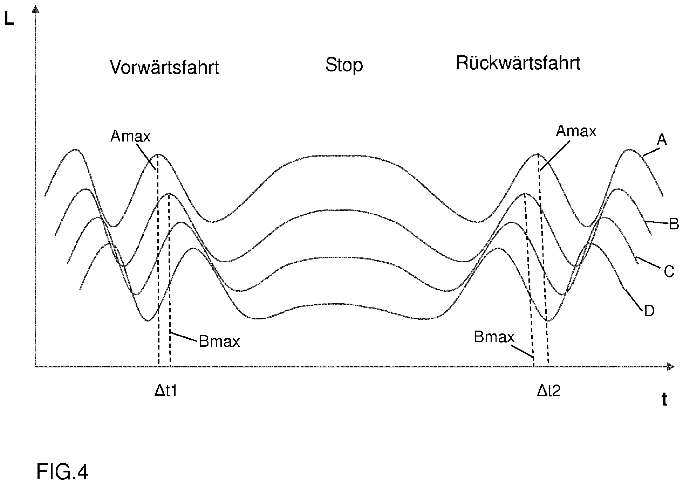

Das Fahrzeug weist beispielsweise vier Räder A, B, C, D (Figuren 3 und 4) mit jeweils einem eigenen induktiven Geschwindigkeitssensor als Raddrehzahlsensor 1 auf. Dann wird ein Vorliegen von Vorwärtsfahrt oder Rückwärtsfahrt des Fahrzeugs auf der Basis von wenigstens einem zeitlichen Phasenversatz zwischen zeitlichen Verläufen der mittels der Raddrehzahlsensoren an beispielsweise zwei Rädern A und B erfassten Induktivitäten L durch die elektronische Auswerteschaltung 7 ermittelt. Mit anderen Worten wird ein Vorliegen von Vorwärtsfahrt oder Rückwärtsfahrt des Fahrzeugs auf der Basis wenigstens eines zeitlichen Phasenversatzes der zeitlichen Verläufe der von den Raddrehzahlsensoren 1 von wenigstens zwei unterschiedlichen Rädern des Fahrzeugs erfassten Induktivitäten L ermittelt.

Diese Vorwärtsfahrt-/Rückwärtsfahrterkennung soll nun anhand der Diagramme von **Fig.3****,** und von **Fig.4** näher erläutert werden, welche jeweils den zeitlichen Verlauf der von vier Raddrehzahlsensoren erfassten Induktivitäten L von vier Rädern A, B, C und D des Fahrzeugs über der Zeit t darstellen. Dabei erfasst für jedes Rad A, B, C und D ein eigener Raddrehzahlsensor 1 die (Dreh-) Geschwindigkeit bzw. die Raddrehzahl. Mit A ist das erste Rad, mit B das zweite Rad, mit C das dritte Rad und mit D das vierte Rad des Fahrzeugs bezeichnet.

Es wird dabei beispielhaft davon ausgegangen, dass die elektronischen Auswerteschaltungen 7 der vier Raddrehzahlsensoren in einer integrierten elektronischen Auswerteschaltung 7 zusammengefasst sind und dass eine Vorwärtsfahrt-, Rückwärtsfahrt- sowie auch eine Stillstanderkennung in der integrierten elektronischen Auswerteschaltung 7 implementiert ist.

Ausgehend von einer durch die Raddrehzahlsensoren 1 erfassten Fahrt des Fahrzeugs, beispielsweise bei einer Vorwärtsfahrt mit einer Geschwindigkeit, welche beispielsweise niedriger als der Geschwindigkeitsgrenzwert ist, wird ein erster zeitlicher Phasenversatz Δt1 zwischen ersten zeitlichen Verläufen der Induktivitäten L beispielsweise der beiden Raddrehzahlsensoren 1 des ersten Rades A und des zweiten Rades B bis zu einem erfassten Stillstand des Fahrzeugs gespeichert. Die ersten zeitlichen Verläufe der Induktivitäten L der Raddrehzahlsensoren 1 aller vier Räder A bis D sind in **Fig.3** links dargestellt. Aus **Fig.3** geht hervor, dass bei der Vorwärtsfahrt die ersten zeitlichen Verläufe der Induktivitäten L der vier Raddrehzahlsensoren der vier Räder A bis D jeweils einen Phasenversatz zueinander aufweisen.

Beispielhaft ist in **Fig.3** der erste zeitliche Phasenversatz Δt1 zwischen dem von dem Raddrehzahlsensor 1 des ersten Rades A und dem von dem Raddrehzahlsensor 1 des zweiten Rades B erfassten Induktivitätsverlauf zwischen den Amplitudenmaxima Amax und Bmax gezeigt. Alternativ könnte dieser der erste zeitliche Phasenversatz Δt1 auch zwischen beliebigen sich entsprechenden Werten der von dem Raddrehzahlsensor 1 des ersten Rades A und dem von dem Raddrehzahlsensor 1 des zweiten Rades B erfassten Induktivitätsverlauf ermittelt werden. Bei Vorwärtsfahrt eilt der Verlauf der Induktivität L an dem ersten Rad A dem Verlauf der Induktivität L an dem zweiten Rad B daher um den zeitlichen ersten Phasenversatz Δt1 vor, wie aus **Fig.3** links hervorgeht.

Es wird nun angenommen, dass das Fahrzeug ausgehend von der Vorwärtsfahrt bis in den Stillstand (Stop) abgebremst wird, was von der integrierten elektronischen Auswerteschaltung 7 beispielsweise dadurch erkannt wird, dass die zeitlichen Verläufe der von den Raddrehzahlsensoren aller vier Räder A bis D erfassten Induktivitäten L jeweils einen Gradienten von Null aufweisen und/oder sich die Induktivitäten L nicht ändern bzw. konstant bleiben, was in **Fig.3** etwa in der Mitte anschaulich dargestellt wird.

Nach einem durch die integrierte elektronische Auswerteschaltung 7 erfassten Wiederanfahren des Fahrzeugs aus dem erfassten Fahrzeugstillstand wird dann ein zweiter zeitlicher Phasenversatz Δt2 zwischen zweiten zeitlichen Verläufen der Induktivitäten L der Raddrehzahlsensoren 1 des ersten Rades A und des zweiten Rades B erfasst. Diese zweiten zeitlichen Verläufe der Induktivitäten L der Raddrehzahlsensoren 1 der beiden Räder A und B sowie der zweite zeitliche Phasenversatz Δt2 sind in **Fig.3** und in **Fig.4** jeweils rechts dargestellt.

Analog zum ersten zeitlichen Phasenversatz Δt1 wird der zweite zeitliche Phasenversatz Δt2 hier beispielsweise ebenfalls zwischen den Amplitudenmaxima Amax und Bmax der zweiten zeitlichen Verläufe der Induktivitäten L der Raddrehzahlsensoren 1 des ersten Rades A und des zweiten Rades B angegeben.

Dann wird der zweite zeitliche Phasenversatz Δt2 mit dem ersten zeitlichen Phasenversatz Δt2 verglichen. Wenn die integrierte elektronische Auswerteschaltung 7 dabei feststellt, dass der zweite zeitliche Phasenversatz Δt2 von dem ersten zeitlichen Phasenversatz Δt1 eine signifikante Abweichung aufweist, so schließt sie auf eine Umkehrung der Fahrtrichtung von Vorwärtsfahrt auf Rückwärtsfahrt.

Als eine signifikante Abweichung des zweiten zeitlichen Phasenversatzes Δt2 von dem ersten zeitlichen Phasenversatz Δt1 wird beispielsweise interpretiert, wenn der zweite zeitliche Phasenversatz Δt2 gegenüber dem ersten zeitlichen Phasenversatz Δt1 invertiert ist. Diese Situation ist in **Fig.4** dargestellt. Bei den in **Fig.4** links dargestellten zeitlichen Verläufen der Induktivitäten L der vier Räder A bis D bei Vorwärtsfahrt eilt wie bei der Vorwärtsfahrt von **Fig.3** links der Verlauf der Induktivität L an dem ersten Rad A dem Verlauf der Induktivität L an dem zweiten Rad B um den ersten zeitlichen Phasenversatz Δt1 vor. Bei der in **Fig.4** rechts dargestellten, nach dem Stillstand des Fahrzeugs beginnenden Weiterfahrt sind die Verhältnisse jedoch umgekehrt, d.h. dass der Verlauf der Induktivität L an dem ersten Rad A dem Verlauf der Induktivität L an dem zweiten Rad B nun nicht mehr um den ersten zeitlichen Phasenversatz Δt1 voreilt sondern im Gegenteil um den zweiten zeitlichen Phasenversatz Δt2 nacheilt. Folglich hat nach dem Zwischenstopp eine Umkehrung der Fahrtrichtung des Fahrzeugs von Vorwärtsfahrt auf Rückwärtsfahrt stattgefunden.

Falls die integrierte elektronische Auswerteschaltung 7 bei dem Vergleich aber andernfalls feststellt, dass eine lediglich nicht signifikante Abweichung des zweiten zeitlichen Phasenversatzes Δt2 von dem ersten zeitlichen Phasenversatz Δt1 vorliegt, so schließt sie auf eine Beibehaltung der Fahrtrichtung Vorwärtsfahrt. Diese Situation ist in **Fig.3** rechts dargestellt. Dort eilt bei der nach dem Stillstand des Fahrzeugs beginnenden Weiterfahrt des Fahrzeugs der Verlauf der Induktivität L an dem ersten Rad A dem Verlauf der Induktivität L an dem zweiten Rad B wie vor dem Zwischenstopp um den zweiten zeitlichen Phasenversatz Δt2 vor, welcher beispielsweise gegenüber dem ersten zeitlichen Phasenversatz Δt1 identisch ist. Folglich liegt hier keine signifikante Abweichung des zweiten zeitlichen Phasenversatzes Δt2 von dem ersten zeitlichen Phasenversatz Δt1 vor.

Das Schließen auf eine Umkehrung der Fahrtrichtung von Vorwärtsfahrt auf Rückwärtsfahrt oder von Rückwärtsfahrt auf Vorwärtsfahrt bzw. das Schließen auf eine Beibehaltung der Fahrtrichtung Vorwärtsfahrt oder Rückwärtsfahrt kann eine Erzeugung eines entsprechenden Signals durch die integrierte elektronische Auswerteschaltung 7 beinhalten, welches dann zur Weiterverarbeitung beispielsweise einem Fahrerassistenzsystem zur Verfügung gestellt wird. Bei einem solchen Fahrerassistenzsystem handelt es sich insbesondere um ein Fahrerassistenzsystem mit einer Autohold-Funktion oder Berganfahrhilfe-Funktion, bei welcher ein Feststellen des Fahrzeugstillstands bzw. ein Anfahren oder Anrollen des Fahrzeugs in einer detektierten Richtung von Bedeutung ist.

### Bezugszeichenliste

- 1: Raddrehzahlsensor
- 2: Geberelement
- 3: Spule
- 4: Kern
- 5: Zähne
- 6: Zahnlücke
- 7: Auswerteschaltung
- 8: Leitungen
- 9: Spalt
- 10: Permanentmagnet
- 11: Pfeil
- A: erstes Rad
- B: zweites Rad
- C: drittes Rad
- D: viertes Rad
- U: induzierte Spannung
- L: Induktivität
- Δt1: erster zeitlicher Phasenversatz
- Δt2: zweiter zeitlicher Phasenversatz

## Patentansprüche

1. Fahrerassistenzsystem eines Fahrzeugs, welches eine Geschwindigkeitsmessvorrichtung zum Bestimmen einer Geschwindigkeit zwischen einem wenigstens eine Spule (3) umfassenden Messaufnehmer und einem die Induktivität (L) der wenigstens einen Spule (3) und die in der wenigstens einen Spule (3) induzierte Spannung (U) verändernden ferromagnetischen Geberelement (2) in dem Fahrzeug umfasst, welche wenigstens einen induktiven Geschwindigkeitssensor (1) aufweist, der mindestens Folgendes umfasst:
a) die wenigstens eine Spule (3),
b) das ferromagnetische Geberelement (2), welches dazu eingerichtet ist, sich zusammen mit einem Rad des Fahrzeugs koaxial in Bezug auf die Radachse zu drehen,
c) eine Auswerteschaltung (7), wobei
d) die Geschwindigkeitsmessvorrichtung eine Raddrehzahlmessvorrichtung ausbildet und der induktive Geschwindigkeitssensor (1) einen Raddrehzahlsensor, und
e) die Auswerteschaltung (7) ausgebildet ist, dass sie eine Änderung der Induktivität (L) der wenigstens einen Spule (3) erfasst und die Geschwindigkeit als Drehgeschwindigkeit des Rads basierend auf der geänderten Induktivität (L) der wenigstens einen Spule (3) bestimmt, **dadurch gekennzeichnet, dass**
f) der induktive Geschwindigkeitssensor (1) ein passiver induktiver Geschwindigkeitssensor (1) ist, wobei
f1) die wenigstens eine Spule (3) in einen Parallel- oder Seriell-Schwingkreis verschaltet ist und die Auswerteschaltung (7) ausgebildet ist, dass sie die Induktivität (L) der wenigstens einen Spule (3) abhängig von der Resonanzfrequenz des Schwingkreises erfasst, oder dass
f2) Mittel zum Beaufschlagen der wenigstens einen Spule (3) mit einem elektrischen Impuls vorgesehen sind, welche dazu eingerichtet sind, die wenigstens eine Spule (3) mit einem elektrischen Impuls zu beaufschlagen, wobei die Auswerteschaltung (7) ausgebildet ist, dass sie die Induktivität (L) der wenigstens einen Spule (3) abhängig von der Antwort der wenigstens einen Spule (3) auf den elektrischen Impuls erfasst, oder dass
f3) Mittel zum Beaufschlagen der wenigstens einen Spule (3) mit einer konstanten Frequenz vorgesehen sind, welche dazu eingerichtet sind, die wenigstens eine Spule (3) mit einer konstanten Frequenz zu beaufschlagen, und die Auswerteschaltung (7) ausgebildet ist, dass sie dann die Induktivität (L) der wenigstens einen Spule (3) erfasst, und dass
g) die Auswerteschaltung (7) weiterhin ausgebildet ist, dass sie
g1) das Erfassen der Änderung der Induktivität (L) der wenigstens einen Spule (3) und das Bestimmen der Geschwindigkeit im Rahmen des Fahrerassistenzsystems basierend auf der geänderten Induktivität (L) der wenigstens einen Spule (3) nur solange vornimmt, bis die bestimmte Geschwindigkeit ausgehend von niedrigeren Geschwindigkeiten einen Geschwindigkeitsgrenzwert erreicht hat, und dass sie aber
g2) wenn die bestimmte Geschwindigkeit den Geschwindigkeitsgrenzwert ausgehend von niedrigeren Geschwindigkeiten überschritten hat, eine Änderung der in der der wenigstens einen Spule (3) induzierten Spannung (U) erfasst und die Geschwindigkeit basierend auf der geänderten Spannung (U) bestimmt wird, und dass sie
g3) wenn die bestimmte Geschwindigkeit ausgehend von höheren Geschwindigkeiten den Geschwindigkeitsgrenzwert erreicht oder unterschritten hat, eine Änderung der Induktivität (L) der wenigstens einen Spule (3) erfasst und die Geschwindigkeit basierend auf der geänderten Induktivität (L) der wenigstens einen Spule (3) bestimmt wird.

2. Fahrerassistenzsystem nach Anspruch 1, **dadurch gekennzeichnet, dass** das ferromagnetische Geberelement (2) abwechselnd vorspringende Zähne (5) und Zahnlücken (6) aufweist.

3. Fahrerassistenzsystem nach Anspruch 1 oder 2, **dadurch gekennzeichnet, dass** die wenigstens eine Spule (3) einen weichmagnetischen Kern (4) umgibt.

4. Fahrerassistenzsystem nach Anspruch 3, **dadurch gekennzeichnet, dass** der weichmagnetische Kern (4) an einem vom ferromagnetischen Geberelement (2) wegweisenden Ende einen Permanentmagneten (10) aufweist.

5. Fahrerassistenzsystem nach einem der vorhergehenden Ansprüche, **dadurch gekennzeichnet, dass** es eine Autohold-Funktion und/oder eine Berganfahrhilfe-Funktion und/oder eine Antriebsschlupfregelung (ASR) beinhaltet.

6. Fahrerassistenzsystem nach einem der Ansprüche 1 bis 5, **dadurch gekennzeichnet, dass** für wenigstens zwei Räder (A, B) des Fahrzeugs jeweils ein induktiver Geschwindigkeitssensor (1) als Raddrehzahlsensor vorgesehen ist, und dass die Auswerteschaltung (7) ausgebildet ist, dass sie eine Umkehrung der Fahrtrichtung des Fahrzeugs von Vorwärtsfahrt auf Rückwärtsfahrt oder von Rückwärtsfahrt auf Vorwärtsfahrt auf der Basis wenigstens eines zeitlichen Phasenversatzes (Δt1, Δt2) der zeitlichen Verläufe der mittels der Raddrehzahlsensoren (1) der wenigstens zwei Räder (A, B) erfassten Induktivitäten (L) erkennt.

7. Fahrerassistenzsystem nach Anspruch 6, **dadurch gekennzeichnet, dass** die Auswerteschaltung (7) ausgebildet ist, dass sie
a) ausgehend von einer erfassten Fahrt des Fahrzeugs wenigstens einen ersten zeitlichen Phasenversatz (Δt1) zwischen ersten zeitlichen Verläufen der von den Raddrehzahlsensoren (1) der wenigstens zwei Räder (A, B) erfassten Induktivitäten (L) bis zu einem erfassten Stillstand des Fahrzeugs speichert, und dann
b) nach einem erfassten Wiederanfahren des Fahrzeugs wenigstens einen zweiten zeitlichen Phasenversatz (Δt2) zwischen zweiten zeitlichen Verläufen der von den Raddrehzahlsensoren (1) der wenigstens zwei Räder (A, B) erfassten Induktivitäten (L) erfasst und mit dem wenigstens einen ersten zeitlichen Phasenversatz (Δt1) vergleicht, und wenn sie dabei feststellt, dass
c) der wenigstens eine zweite zeitliche Phasenversatz (Δt2) von dem wenigstens einen ersten zeitlichen Phasenversatz (Δt1) eine signifikante Abweichung aufweist, auf eine Umkehrung der Fahrtrichtung von Vorwärtsfahrt auf Rückwärtsfahrt oder von Rückwärtsfahrt auf Vorwärtsfahrt schließt, und falls sie aber
d) andernfalls feststellt, dass eine lediglich nicht signifikante Abweichung des wenigstens einen zweiten zeitlichen Phasenversatzes (Δt2) von dem wenigstens einen ersten zeitlichen Phasenversatz (Δt1) vorliegt, auf eine Beibehaltung der Fahrtrichtung Vorwärtsfahrt oder Rückwärtsfahrt schließt.

8. Fahrerassistenzsystem nach Anspruch 7, **dadurch gekennzeichnet, dass** die Auswerteschaltung (7) ausgebildet ist, dass sie als eine signifikante Abweichung des wenigstens einen zweiten zeitlichen Phasenversatzes (Δt2) von dem wenigstens einen ersten zeitlichen Phasenversatz (Δt1) interpretiert, wenn sie feststellt, dass der wenigstens eine zweite zeitliche Phasenversatz (Δt2) gegenüber dem wenigstens einen ersten zeitlichen Phasenversatz (Δt1) invertiert ist, wobei sich ein zeitlicher Vorlauf des ersten Verlaufs der von dem Raddrehzahlsensor (1) eines ersten Rads (A) der wenigstens zwei Räder (A, B) erfassten Induktivität (L) gegenüber dem ersten Verlauf der von dem Raddrehzahlsensor (1) eines zweiten Rads (B) der wenigstens zwei Räder (A, B) erfassten Induktivität (L) um den ersten zeitlichen Phasenversatz (Δt1) in einen zeitlichen Nachlauf des zweiten Verlaufs der von dem Raddrehzahlsensor (1) des ersten Rads (A) der wenigstens zwei Räder (A, B) erfassten Induktivität (L) gegenüber dem zweiten Verlauf der von dem Raddrehzahlsensor (1) des zweiten Rads (B) der wenigstens zwei Räder (A, B) erfassten Induktivität (L) um den zweiten zeitlichen Phasenversatz (Δt2) ändert.

9. Fahrassistenzsystem nach einem der Ansprüche 6 bis 8, **dadurch gekennzeichnet, dass** die Auswerteschaltung (7) ausgebildet ist, dass sie einen Stillstand des Fahrzeugs dadurch erfasst, dass sie in dem zeitlichen Verlauf der Induktivität (L) einen Abschnitt identifiziert, in welchem sich die Induktivität (L) nicht ändert und/oder in welchem der Gradient des Verlaufs der Induktivität (L) im Wesentlichen gleich Null ist.

10. Fahrzeug mit einem Fahrerassistenzsystem nach einem der vorhergehenden Ansprüche.

## Claims

1. Driver assistance system of a motor vehicle which comprises a speed measurement device for determining a speed between a measuring sensor comprising at least one coil (3) and a ferromagnetic encoder element (2) altering the voltage induced in the at least one coil (3), which has at least one inductive speed sensor (1) which comprises at least the following:
a) the at least one coil (3),
b) the ferromagnetic encoder element (2) which is arranged to turn together with a wheel of the vehicle coaxially in regard to the wheel axis,
c) an evaluating circuit (7), wherein
d) the speed measurement device forms a wheel rotational speed measurement device and the inductive speed sensor (1) forms a wheel rotational speed sensor, and
e) the evaluating circuit (7) is designed to detect a change in the inductance (L) of the at least one coil (3) and determines the speed as a rotational speed of the wheel on the basis of the changed inductance (L) of the at least one coil (3), **characterised in that**
f) the inductive speed sensor (1) is a passive inductive speed sensor, wherein
f1) the at least one coil (3) is connected in a parallel or serial resonant circuit and the evaluation circuit (7) is designed to detect the inductance (L) of the at least one coil (3) as a function of the resonance frequency of the resonant circuit, or that
f2) means for applying an electrical impulse to the at least one coil (3) are provided, which are arranged to apply an electrical impulse to the at least one coil (3), wherein the evaluation circuit (7) is designed to detect the inductance (L) of the at least one coil (3) as a function of the response of the at least one coil (3) to the electrical impulse, or that
f3) means for applying a constant frequency to the at least one coil (3) are provided, which are arranged to apply a constant frequency to the at least one coil (3), and the evaluation circuit (7) is designed to then detect the inductance (L) of the at least one coil (3), and that
g) the evaluation circuit (7) is furthermore designed to
g1) undertake the detection of the change in the inductance (L) of the at least one coil (3) and the determination of the speed in the context of the driver assistance system on the basis of the change in inductance (L) of the at least one coil (3) only until the specified speed, starting from lower speeds, has achieved a speed threshold value, and that, however,
g2) when the specified speed has exceeded the speed threshold value starting from lower speeds, a change in the voltage (U) induced in the at least one coil (3) is detected and the speed is determined on the basis of the changed voltage (U), and that
g3) when the specified speed starting from higher speeds has reached or undershot the speed threshold, a change in the inductance (L) of the at least one coil (3) is detected and the speed is determined on the basis of the changed inductance (L) of the at least one coil (3).

2. Driver assistance system according to claim 1, **characterized in that** the ferromagnetic encoder element (2) has in alternation projecting teeth (5) and tooth gaps (6).

3. Driver assistance system according to claim 1 or 2, **characterised in that** the at least one coil (3) surrounds a soft magnetic core (4).

4. Driver assistance system according to claim 3, **characterized in that** the soft magnetic core (4) has a permanent magnet (10) at an end facing away from the ferromagnetic encoder element (2).

5. Driver assistance system according to any one of the preceding claims, **characterized in that** it contains an autohold function and/or a hill-start assist function and/or a traction control system (TCS).

6. Driver assistance system according to any one of claims 1 to 5, **characterized in that** for at least two wheels (A, B) of the motor-vehicle in each case one inductive speed sensor (1) is provided as a wheel speed sensor, and that the evaluation circuit (7) is designed to recognize a reversal of the direction of the drive of the motor vehicle from forwards drive to reverse drive or from reverse drive to forward drive on the basis of at least one temporal phase offset (Δt1, Δt2) of the temporal forces of the inductances (L) detected by means of the wheels sensors (1) of the at least two wheels (A, B).

7. Driver assistance system according to claim 6, **characterized in that** the evaluation circuit (7) is designed that it
a) starting from a detected journey of the motor-vehicle stores at least one first temporal phase offset (Δt1) between first temporal courses of the inductances (L) detected by the wheel speed sensors (1) of the at least two wheels (A, B) until a detected standstill of the vehicle, and then
b) after a detected resumption of motion of the vehicle, to detect a second temporal phase offset (Δt2) between second temporal courses of the inductances (L) detected by the wheel speed sensors (1) of the at least two wheels (A, B) and compares it with the at least one first temporal phase offset (Δt1), and when it ascertains that
c) the at least one second temporal phase offset (Δt2) has a significant deviation from the at least one first temporal phase offset (Δt1), concludes a reversal of the direction of travel from forwards drive to reverse drive or from reverse drive to forwards drive, and if, however,
d) it ascertains, on the other hand, that there is a merely non-significant deviation of the at least one second temporal phase offset (Δt2) from the at least one first temporal phase offset (Δt1), concludes a continuation of the direction of travel as forwards drive or reverse drive.

8. Driver assistance system according to claim 7, **characterized in that** the evaluation circuit (7) is designed to interpret it as a significant deviation of the at least one second temporal phase offset (Δt2) from the at least one first temporal phase offset (Δt1) when it determines that the at least one second temporal phase offset (Δt2) is inverted with respect to the at least one first temporal phase offset (Δt1), wherein a lead time of the first course of the inductance (L) detected by the wheel speed sensor (1) of a first wheel (A) of the at least two wheels (A, B) with respect to the first course of the inductance (L) detected by the wheel speed sensor (1) of a second wheel (B) of the at least two wheels (A, B) changes by the first temporal phase offset (Δt1) into a time lag of the second course of the inductance (L) detected by the wheel speed sensor (1) of the first wheel (A) of the at least two wheels (A, B) with respect to the second course of the inductance (L) detected by the wheel speed sensor (1) of the second wheel (B) of the at least two wheels (A, B) by the second temporal phase offset (Δt2).

9. Driver assistance system according to any one of claims 6 to 8, **characterized in that** the evaluation circuit (7) is designed to detect a standstill of the vehicle **in that** it identifies in the temporal course of the inductance (L) a section in which the inductance (L) does not change and/or in which the gradient of the course of the inductance (L) is substantially equal to zero.

10. Vehicle having a driver assistance system according to any of the preceding claims.

## Revendications

1. Système d'aide à la conduite d'un véhicule qui comprend un dispositif de mesure de vitesse pour la détermination d'une vitesse entre un capteur de mesure comprenant au moins une bobine (3) et un élément transmetteur (2) ferromagnétique modifiant l'inductance (L) de l'au moins une bobine (3) et la tension (U) induite dans l'au moins une bobine (3) dans le véhicule, dispositif qui présente au moins un capteur de vitesse (1) inductif qui comprend au moins ce qui suit :
a) l'au moins une bobine (3),
b) l'élément transmetteur (2) ferromagnétique qui est conçu afin de tourner conjointement avec une roue du véhicule de manière coaxiale par rapport à l'essieu de roue,
c) un circuit d'évaluation (7), dans lequel
d) le dispositif de mesure de vitesse forme un dispositif de mesure de vitesse de rotation de roue et le capteur de vitesse (1) inductif forme un capteur de vitesse de rotation de roue et
e) le circuit d'évaluation (7) est configuré de sorte qu'il détecte une modification de l'inductance (L) de l'au moins une bobine (3) et détermine la vitesse comme vitesse de rotation de la roue sur la base de l'inductance (L) modifiée de l'au moins une bobine (3), **caractérisé en ce que**
f) le capteur de vitesse inductif (1) est un capteur de vitesse (1) inductif passif, dans lequel
f1) l'au moins une bobine (3) est câblée dans un circuit oscillant parallèle ou en série et le dispositif d'évaluation (7) est configuré de telle sorte qu'il détecte l'inductance (L) de l'au moins une bobine (3) en fonction de la fréquence de résonance du circuit oscillant ou **en ce que**
f2) des moyens d'application d'une impulsion électrique à l'au moins une bobine(3) qui sont conçus afin d'appliquer une impulsion électrique à l'au moins une bobine (3) sont prévus, dans lequel le circuit d'évaluation (7) est configuré de telle sorte qu'il détecte l'inductance (L) de l'au moins une bobine (3) en fonction de la réponse de l'au moins une bobine (3) à l'impulsion électrique ou **en ce que**
f3) des moyens d'application d'une fréquence constante à l'au moins une bobine (3) qui sont conçus afin d'appliquer une fréquence constante à l'au moins une bobine (3) sont prévus, et le circuit d'évaluation (7) est configuré de telle sorte qu'il détecte alors l'inductance (L) de l'au moins une bobine (3) et **en ce que**
g) le circuit d'évaluation (7) est en outre formé de telle sorte qu'il
g1) effectue la détection de la modification de l'inductance (L) de l'au moins une bobine (3) et la détermination de la vitesse dans le cadre du système d'aide à la conduite sur la base de l'inductance (L) modifiée de l'au moins une bobine (3) uniquement jusqu'à ce que la vitesse déterminée ait atteint une valeur limite de vitesse en partant de vitesses plus basses, et qu'il
g2) détecte toutefois, lorsque la vitesse déterminée a dépassé la valeur limite de vitesse en partant de vitesses plus basses, une modification de la tension (U) induite dans l'au moins une bobine (U), et la vitesse est déterminée sur la base de la tension modifiée (U), et qu'il
g3) détecte, lorsque la vitesse déterminée a atteint la valeur limite de vitesse en partant de vitesses plus élevées ou est restée en dessous de celle-ci, une modification de l'inductance (L) de l'au moins une bobine (3), et la vitesse est déterminée sur la base de l'inductance (L) modifiée de l'au moins une bobine (3).

2. Système d'aide à la conduite selon la revendication 1, **caractérisé en ce que** l'élément transmetteur (2) ferromagnétique présente des dents (5) et des entre-dents (6) faisant saillie en alternance.

3. Système d'aide à la conduite selon la revendication 1 ou 2, **caractérisé en ce que** l'au moins une bobine (3) entoure un noyau magnétique doux (4).

4. Système d'aide à la conduite selon la revendication 3, **caractérisé en ce que** le noyau magnétique doux (4) présente un aimant permanent (10) au niveau d'une extrémité éloignée de l'élément transmetteur (2) ferromagnétique.

5. Système d'aide à la conduite selon l'une quelconque des revendications précédentes, **caractérisé en ce qu'**il contient une fonction Autohold et/ou une fonction d'aide au démarrage en côte et/ou un système antipatinage (ASR).

6. Système d'aide à la conduite selon l'une quelconque des revendications 1 à 5, **caractérisé en ce que** pour au moins deux roues (A, B) du véhicule, respectivement un capteur de vitesse (1) inductif est prévu comme capteur de vitesse de rotation de roue, et **en ce que** le circuit d'évaluation (7) est configuré de telle sorte qu'il reconnaisse une inversion du sens de la marche du véhicule de la marche avant à la marche arrière ou de la marche arrière à la marche avant sur la base au moins d'un déphasage temporel (Δt1, Δt2) des évolutions dans le temps des inductances (L) détectées au moyen des capteurs de vitesse de rotation de roue (1) des au moins deux roues (A, B).

7. Système d'aide à la conduite selon la revendication 6, **caractérisé en ce que** le circuit d'évaluation (7) est configuré de telle sorte qu'il
a) enregistre en partant d'une marche détectée du véhicule au moins un premier déphasage temporel (Δt1) entre des premières évolutions dans le temps des inductances (L) détectées par les capteurs de vitesse de rotation de roue (1) des au moins deux roues (A, B) jusqu'à un arrêt détecté du véhicule, et ensuite
a) après un redémarrage détecté du véhicule, au moins un second déphasage temporel (Δt2) entre des secondes évolutions dans le temps des inductances (L) détectées par les capteurs de vitesse de rotation de roue (1) des au moins deux roues (A, B) et avec l'au moins un premier déphasage (Δt1) temporel, et lorsqu'il constate alors que
c). l'au moins un second déphasage temporel (Δt2) de l'au moins un premier déphasage temporel (Δt1) présente un écart significatif, conclut à une inversion du sens de la marche de la marche avant à la marche arrière ou de la marche arrière à la marche avant, et s'il
d) constate dans le cas contraire qu'il y a seulement un écart non significatif de l'au moins un second déphasage temporel (Δt2) par rapport à l'au moins un premier déphasage temporel (Δt1), conclut à un maintien du sens de la marche de la marche avant ou de la marche arrière.

8. Système d'aide à la conduite selon la revendication 7, **caractérisé en ce que** le circuit d'évaluation (7) est configuré de telle sorte qu'il interprète comme un écart significatif de l'au moins un second déphasage temporel (Δt2) par rapport à l'au moins un premier déphasage temporel (Δt1) lorsqu'il constate que l'au moins un second déphasage temporel (Δt2) est inversé par rapport à l'au moins un premier déphasage temporel (Δt1), dans lequel une avance de la première évolution de l'inductance (L) détectée par le capteur de vitesse de rotation de roue (1) d'une première roue (A) des au moins deux roues (A, B) par rapport à la première évolution de l'inductance (L) détectée par le capteur de vitesse de rotation de roue (1) d'une seconde roue (B) des au moins deux roues (A, B) change par le premier déphasage temporel (Δt1) en un retard de la seconde évolution de l'inductance (L) détectée par le capteur de vitesse de rotation de roue (1) de la première roue (A) des au moins deux roues (A, B) par rapport à la seconde évolution de l'inductance (L) détectée par le capteur de vitesse de rotation de roue (1) de la seconde roue (B) des au moins deux roues (A, B) par le second déphasage temporel (Δt2).

9. Système d'aide à la conduite selon l'une quelconque des revendications 6 à 8, **caractérisé en ce que** le circuit d'évaluation (7) est configuré de telle sorte qu'il détecte un arrêt du véhicule en raison du fait qu'il identifie dans l'évolution dans le temps de l'inductance (L) une section dans laquelle l'inductance (L) ne change pas et/ou dans laquelle le gradient de l'évolution de l'inductance (L) est sensiblement égal à zéro.

10. Véhicule avec un système d'aide à la conduite selon l'une quelconque des revendications précédentes.
